# EUROPEAN PATENT APPLICATION

(11) **EP 2 549 763 A2**
(43) Date of publication of application: **23.01.2013**
(21) Application number: 12004966.3
(22) Date of filing: 04.07.2012
(51) Int. Cl.: H04N 13/02, H04N 5/235, H04N 5/232, H04N 5/225

(54) **Dual image capture processing**

(30) Priority: 20.07.2011 US 201161509747 P; 22.12.2011 US 201113335028
(71) Applicant: Broadcom Corporation, Irvine, CA 92617 (US)
(72) Inventor: Brisedoux, Laurent, Cambridge CB4 1PQ (GB); Plowman, David, Great Chesterfield, CB10 IPL (GB); Fridental, Ron, 60850 Shoham (IL); Sewell, Benjamin, Truro TR1 3NL (GB); Patuck, Naushir, Cambridge CB1 2PR (GB); Harding, Cressida, Histon Cambridge CB24 9JS (GB)
(74) Representative: Jehle, Volker Armin

(57) **Abstract**

Embodiments of imaging devices of the present disclosure automatically utilize simultaneous image captures in an image processing pipeline. In one embodiment, control processing circuitry initiates simultaneous capture of the first image by the first image sensor and the second image by the second image sensor; and image processing circuitry generates an enhanced monoscopic image comprising at least portions of the first image and the second image. The control processing circuitry is configured to switch automatically between modes of operation comprising at least two of the monoscopic mode, stereoscopic mode or the enhanced monoscopic mode.

## Description

### CROSS-REFERENCE TO RELATED APPLICATION

This application claims priority to copending U.S. provisional application entitled, "Image Capture Device Systems and Methods," having ser. no. 61/509,747, filed July 20, 2011, which is entirely incorporated herein by reference.

### BACKGROUND

Some types of image processing, such as high dynamic range (HDR) image processing, involves combining one camera's sequential still image output (*e.g.*, each with differing exposure) into a single still image with a higher dynamic range (*i.e.,* an image with a larger range of luminance variation between light and dark image areas). This approach is often called exposure bracketing and can be found in conventional cameras.

### BRIEF SUMMARY OF THE INVENTION

According to an aspect, an image capture device comprises:
a first image sensor for recording a first image;
a second image sensor for recording a second image;
control processing circuitry to initiate simultaneous capture of the first image by the first image sensor and the second image by the second image sensor; and
image processing circuitry to generate an enhanced monoscopic image comprising at least portions of the first image and the second image.

Advantageously, the enhanced monoscopic image comprises a first portion obtained from the first image and a second portion obtained from the second image,
wherein the first portion comprises at least one of having an exposure level that is different from the second portion or having a depth of field that is different from the second portion.

Advantageously, a resolution of the enhanced monoscopic image is greater than individual resolutions of the first image and the second image.

Advantageously, the second image is analyzed and compared with the first image to isolate a defect in the first image, wherein the enhanced monoscopic image is a corrected version of the first image with the defect removed.

Advantageously, the control processing circuitry is configured to operate in a stereoscopic mode utilizing simultaneous operation of the first image sensor and the second image sensor to generate a stereoscopic image; a monoscopic mode utilizing singular operation of the first image sensor to generate a monoscopic image; and an enhanced monoscopic mode utilizing simultaneous operation of the first image sensor and the second image sensor to generate the enhanced monoscopic image.

Advantageously, the control processing circuitry is configured to automatically switch between modes of operation comprising at least two of the monoscopic mode, the stereoscopic mode, or the enhanced monoscopic mode.

Advantageously, the first image is used as image data for the enhanced monoscopic image and the second image is used as enhancement data to enhance at least one image characteristic of the first image, wherein the enhanced monoscopic image comprises the first image with the at least one improved characteristic.

Advantageously, the image processing circuitry processes similar pixels shared by the first image and the second image in a first processing path and processes dissimilar pixels of the second image in a second processing path.

Advantageously, the first image sensor operates at a first binning level during the simultaneous capture that is different from a second binning level at which the second image sensor operates during the simultaneous capture.

According to an aspect, an image processing method comprises:
recording a first image captured by a first image sensor;
recording a second image captured by a second image sensor, wherein the first image and the second image are simultaneously captured;
comparing at least portions of the first image and the second image; and
responsive to results of the comparing of the first image and the second image, generating an enhanced monoscopic image.

Advantageously, the first image is used as image data for the enhanced monoscopic image and the second image is used as enhancement data to enhance at least one image characteristic of the first image, wherein the enhanced monoscopic image comprises the first image with the at least one improved characteristic.

Advantageously, the at least one improved characteristic comprises at least one of an improved depth of field, an improved resolution; or an improved exposure level.

Advantageously, the second image is analyzed and compared with the first image to isolate a defect in the first image, wherein the enhanced monoscopic image is a corrected version of the first image with the defect removed.

Advantageously, the defect comprises a lens shading defect.

Advantageously, an image capture device comprises the first image sensor and the second image sensor, the method further comprising:
switching operation of the image capture device between a stereoscopic mode utilizing simultaneous operation of the first image sensor and the second image sensor to generate a stereoscopic image; a monoscopic mode utilizing singular operation of the first image sensor to generate a monoscopic image; and an enhanced monoscopic mode utilizing simultaneous operation of the first image sensor and the second image sensor to generate the enhanced monoscopic image.

Advantageously, the first image sensor comprise an image sensor that passes red, green, or blue light to sensor pixels and the second image sensor comprises a different type of image sensor than the first image sensor.

According to an aspect, a computer readable medium is provided having an image processing program, when executed by a hardware processor, causing the hardware processor to:
record a first image captured by a first image sensor;
record a second image captured by a second image sensor, wherein the first image and the second image are simultaneously captured;
compare at least portions of the first image and the second image; and
responsive to results of the comparing of the first image and the second image, generate an enhanced monoscopic image.

Advantageously, an image capture device comprises the first image sensor and the second image sensor, the image processing program further causing the hardware processor to:
switch operation of the image capture device between a stereoscopic mode utilizing simultaneous operation of the first image sensor and the second image sensor to generate a stereoscopic image; a monoscopic mode utilizing singular operation of the first image sensor to generate a monoscopic image; and an enhanced monoscopic mode utilizing simultaneous operation of the first image sensor and the second image sensor to generate the enhanced monoscopic image.

Advantageously, the first image is used as image data for the enhanced monoscopic image and the second image is used as support data to correct a defect in the first image.

Advantageously, the first image is used as image data for the enhanced monoscopic image and the second image is used as enhancement data to enhance at least one image characteristic of the first image, wherein the enhanced monoscopic image comprises the first image with the at least one improved characteristic.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIG. 1 is a block diagram of one embodiment of an image processing circuitry according to the present disclosure.

FIGs. 2-5 are block diagrams of embodiments of an image signal processing pipeline implemented by the pipeline processing logic from the image processing circuitry of FIG. 1.

FIG. 6 is a block diagram illustrating an embodiment of an electronic device employing the image processing circuitry of FIG. 1.

FIGs. 7-9 are flow chart diagrams depicting various functionalities of embodiments of image processing circuitry of FIG. 1.

### DETAILED DESCRIPTION

This disclosure pertains to a device, method, computer useable medium, and processor programmed to automatically utilize simultaneous image captures in an image processing pipeline in a digital camera or digital video camera. One of ordinary skill in the art would recognize that the techniques disclosed may also be applied to other contexts and applications as well.

For cameras in embedded devices, *e.g.*, digital cameras, digital video cameras, mobile phones, personal data assistants (PDAs), tablets, portable music players, and desktop or laptop computers, to produce more visually pleasing images, techniques such as those disclosed herein can improve image quality without incurring significant computational overhead or power costs.

To acquire image data, a digital imaging device may include an image sensor that provides a number of light-detecting elements (*e.g.*, photodetectors) configured to convert light detected by the image sensor into an electrical signal. An image sensor may also include a color filter array that filters light captured by the image sensor to capture color information. The image data captured by the image sensor may then be processed by an image processing pipeline circuitry, which may apply a number of various image processing operations to the image data to generate a full color image that may be displayed for viewing on a display device, such as a monitor.

Conventional image processes, such as conventional high dynamic range (HDR) image processing requires multiple images to be captured sequentially and then combined to yield an HDR with enhanced image characteristics. In conventional HDR image processing, multiple images are captured sequentially by a single image sensor at different exposures and are combined to produce a single image with higher dynamic range than possible with capture of a single image. For example, capture of an outdoor night time shot with a neon sign might result in either over-exposure of the neon sign or under-exposure of the other portions of the scene. However, capturing both an over-exposed image and an under-exposed image and combining the multiple images can yield an HDR image with both adequate exposure for both the sign and the scene. This approach is often called exposure bracketing, but a requirement is that the images captured must be substantially similar even though taken sequentially to prevent substantial introduction of blurring or ghosting.

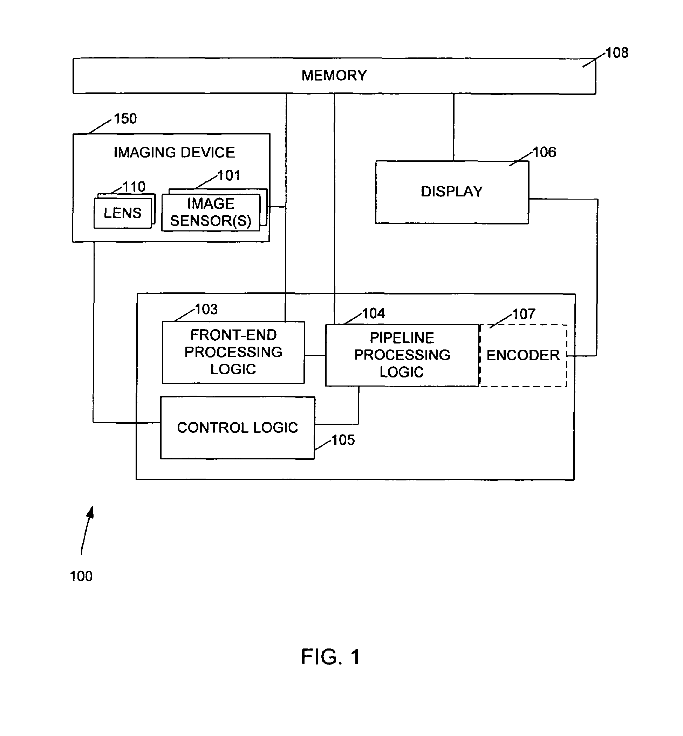

Embodiments of the present disclosure provide enhanced image processing by utilizing multiple images that are captured simultaneously. Referring to FIG. 1, a block diagram of one embodiment of an image processing circuitry 100 is shown for an imaging device 150. The illustrated imaging device 150 may be provided as a digital camera configured to acquire both still images and moving images (*e.g.*, video). The device 150 may include multiple lenses 110 and multiple image sensors 101 configured to capture and convert light into electrical signals. By way of example only, an individual image sensor may include a CMOS (complementary metal-oxide-semiconductor) image sensor (*e.g.*, a CMOS active-pixel sensor (APS)) or a CCD (charge-coupled device) sensor.

One prospective use of an imaging device 150 with multiple cameras or image sensors would be to increase the number of dimensions represented in a displayed image. An example of this type of functionality is a stereoscopic camera which typically has two cameras (*e.g.*, two image sensors). Embodiments of the present disclosure, however, may have more than two cameras or image sensors. Further, embodiments of an imaging device 150 may have modes of operation such that one mode may allow for the imaging device 150 to capture a 2-dimensional (2D) image; a second mode may allow for the imaging device to capture a multi-dimensional image (*e.g.*, 3D image), and a third mode may allow the imaging device to simultaneously capture multiple images and use them to produce one or more 2D enhanced images for which an image processing effect has been applied. Accordingly, some embodiments of the present disclosure encompass a configurable and adaptable multi-imager camera architecture which operates in either a stereoscopic (3D) mode, monoscopic (single imager 2D) mode, and a combinational monoscopic (multiple imager 2D) mode. In one embodiment, mode configuration involves user selection, while adaptation can be automatic or prompted mode operation. For example, monoscopic mode may be used in normally sufficient situations but switched to combinational monoscopic operations when the need is detected by control logic 105.

In some embodiments, the image processing circuitry 100 may include various subcomponents and/or discrete units of logic that collectively form an image processing "pipeline" for performing each of various image processing steps. These subcomponents may be implemented using hardware (*e.g.*, digital signal processors or ASICs (application-specific integrated circuits)) or software, or via a combination of hardware and software components. The various image processing operations may be provided by the image processing circuitry 100.

The image processing circuitry 100 may include front-end processing logic 103, pipeline processing logic 104, and control logic 105, among others. The image sensor(s) 101 may include a color filter array (*e.g.*, a Bayer filter) and may thus provide both light intensity and wavelength information captured by each imaging pixel of the image sensors 101 to provide for a set of raw image data that may be processed by the front-end processing logic 103.

The front-end processing logic 103 may receive pixel data from memory 108. For instance, the raw pixel data may be sent to memory 108 from the image sensor 101. The raw pixel data residing in the memory 108 may then be provided to the front-end processing logic 103 for processing.

Upon receiving the raw image data (from image sensor 101 or from memory 108), the front-end processing logic 103 may perform one or more image processing operations. The processed image data may then be provided to the pipeline processing logic 104 for additional processing prior to being displayed (*e.g.*, on display device 106), or may be sent to the memory 108. The pipeline processing logic 104 receives the "front-end" processed data, either directly from the front-end processing logic 103 or from memory 108, and may provide for additional processing of the image data in the raw domain, as well as in the RGB and YCbCr color spaces, as the case may be. Image data processed by the pipeline processing logic 104 may then be output to the display 106 (or viewfinder) for viewing by a user and/or may be further processed by a graphics engine. Additionally, output from the pipeline processing logic 104 may be sent to memory 108 and the display 106 may read the image data from memory 108. Further, in some implementations, the pipeline processing logic 104 may also include an encoder 107, such as a compression engine, *etc.,* for encoding the image data prior to being read by the display 106.

The encoder 107 may be a JPEG (Joint Photographic Experts Group) compression engine for encoding still images, or an H.264 compression engine for encoding video images, or some combination thereof. Also, it should be noted that the pipeline processing logic 104 may also receive raw image data from the memory 108.

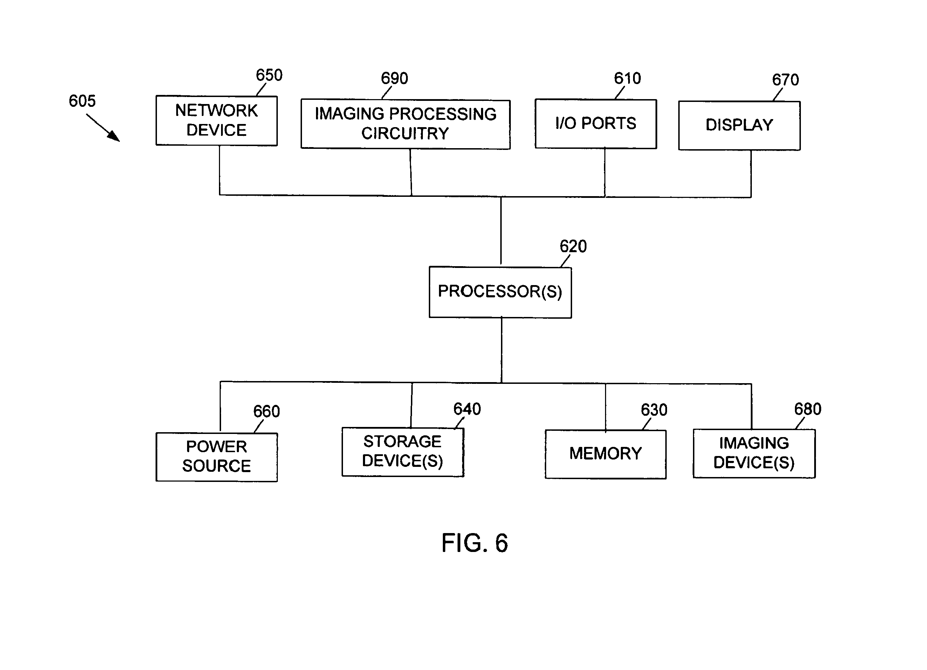

The control logic 105 may include a processor 620 (FIG. 6) and/or microcontroller configured to execute one or more routines (*e.g.*, firmware) that may be configured to determine control parameters for the imaging device 150, as well as control parameters for the pipeline processing logic 104. By way of example only, the control parameters may include sensor control parameters, camera flash control parameters, lens control parameters (*e.g.*, focal length for focusing or zoom), or a combination of such parameters for the image sensor(s) 101. The control parameters may also include image processing commands, such as autowhite balance, autofocus, autoexposure, and color adjustments, as well as lens shading correction parameters for the pipeline processing logic 104. The control parameters may further comprise multiplexing signals or commands for the pipeline processing logic 104.

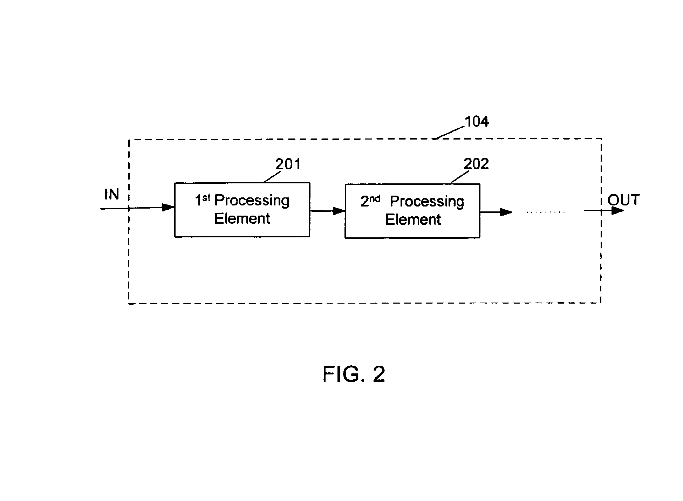

Referring now to FIG. 2, one embodiment of the pipeline processing logic 104 may perform processes of an image signal processing pipeline by first sending image information to a first process element 201 which may take the raw data produced by the image sensor 101 (FIG.1) and generate a digital image that will be viewed by a user or undergo further processing by a downstream process element. Accordingly, the processing pipeline may be considered as a series of specialized algorithms that adjusts image data in real-time and is often implemented as an integrated component of a system-on-chip (SoC) image processor. With an image signal processing pipeline implemented in hardware, front-end image processing can be completed without placing any processing burden on the main application processor 620 (FIG. 6).

In one embodiment, the first process element 201 of an image signal processing pipeline could perform a particular image process such as noise reduction, defective pixel detection/correction, lens shading correction, lens distortion correction, demosaicing, image sharpening, color uniformity, RGB (red, green, blue) contrast, saturation boost process, etc. As discussed above, the pipeline may include a second process element 202. In one embodiment, the second process element 202 could perform a particular and different image process such as noise reduction, defective pixel detection/correction, lens shading correction, demosaicing, image sharpening, color uniformity, RGB contrast, saturation boost process etc. The image data may then be sent to additional element(s) of the pipeline as the case may be, saved to memory 108, and/or input for display 106.

In one embodiment, an image process performed by a process element 201, 202 in the image signal processing pipeline is an enhanced high dynamic range process. A mode of operation for the enhanced high dynamic range process causes simultaneous images to be captured by image sensors 101. By taking multiple images simultaneously, the multiple pictures the object being photographed will be captured at the same time in each image. Under the mode of operation for the enhanced high dynamic range process, multiple images are to be captured at different exposure levels (*e.g.*, different gain settings) or some other characteristic and then be combined to produce an image having an enhanced range for the particular characteristic. For example, an enhanced image may be produced with one portion having low exposure, another portion having a medium exposure, and another portion having a high exposure, depending on the number of images that have been simultaneously captured. In a different scenario, simultaneous images may be captured for different focus levels.

In another embodiment, a different image process performed by a process element 201, 202 in the image signal processing pipeline is an enhanced autofocusing process that can be utilized in many contexts including enhanced continuous autofocusing. A mode of operation for the enhanced high dynamic range process causes simultaneous images to be captured by image sensors 101. One of the image sensors 101 (in an assistive role) may be caused to focus on an object and then scan an entire focusing range to find an optimum focus for the first image sensor. The optimum focus range is then used by a primary image sensor to capture an image of the object. In one scenario, the primary image sensor 101 may be capturing video of the object or a scene involving the object. Accordingly, the optimum focus range attributed to the second or assistive image sensor 101 may change as the scene changes and therefore, the focus used by the primary image sensor 101 may be adjusted as the video is captured.

In an additional embodiment, an image process performed by a process element in the image signal processing pipeline is an enhanced depth of field process. A mode of operation for the enhanced process causes simultaneous images to be captured by image sensors 101. Focusing of the image sensors 101 may be independently controlled by control logic 105. Accordingly, one image sensor may be focused or zoomed closely on an object in a scene and a second image sensor may be focused at a different level on a different aspect of the scene. Image processing in the image single processing pipeline may then take the captured images and combine them to produce an enhanced image with a greater depth of field. Accordingly, multiple images may be combined to effectively extend the depth of field. Also, some embodiments may utilize images from more than two imagers or image sensors 101.

In various embodiments, multiple image sensors 101 may not be focused on a same object in a scene. For example, an order may be applied to the image sensors 101 or imagers, where a primary imager captures a scene and secondary camera captures scene at a different angle or different exposure, different gain, etc., where the second image is used to correct or enhance the primary image. Exemplary operations include, but are not limited to including, HDR capture and enhanced denoise operations by using one frame to help denoise the other, as one example. To illustrate, in one implementation, a scene captured in two simultaneous images may be enhanced by averaging the values of pixels for both images which will improve the signal-to-noise ratio for the captured scene. Also, by having multiple images captured simultaneously at different angles, a curve of the lens shading may be calculated (using the location difference of the same object(s) in the image captures between the two (or more) image sensors) and used to correct effected pixels.

Accordingly, in an additional embodiment, an image process performed by a process element 201, 202 in the image signal processing pipeline is a corrective process. A mode of operation for the enhanced process causes simultaneous images to be captured by image sensors 101. The lens of the respective imagers 101 may have different angles of views. Therefore, in the image process, images captured at the different angles of views may be compared to determine a difference in the two images. For example, defective hardware or equipment may cause a defect to be visible in a captured image. Therefore, the defect in captured images from multiple image sensors 101 is not going to be in the same position in both views/images due to the different angles of view. There will be a small difference, and the image signal processing pipeline is able to differentiate between the defect from the real image and apply some form of correction.

In an additional embodiment, an image process performed by a process element 201, 202 in the image signal processing pipeline is an enhanced image resolution process. A mode of operation for the enhanced process causes simultaneous images to be captured by image sensors 101 at a particular resolution (*e.g.*, 10 Megapixels). Image processing in the image single processing pipeline may then take the captured images and combine them to produce an enhanced image with an increased or super resolution (*e.g.*, 20 Megapixels). Further, in some embodiments, one of the captured images may be used to improve another captured image and vice versa. Accordingly, multiple enhanced monoscopic images may be produced from the simultaneous capture of images.

In an additional embodiment, an image process performed by a process element in the image signal processing pipeline is an enhanced image resolution process. A mode of operation for the enhanced process causes simultaneous video streams of images to be captured by image sensors 101 during low lighting conditions.

Consider that camera image quality often suffers during low light conditions. Ambient lighting is often low and not adequate for image sensor arrays designed for adequate lighting conditions. Thus, such sensor arrays receive insufficient photons to capture images with good exposure leading to dark images. Attempting to correct this via analog or digital gain may help somewhat but also tends to over amplify underlying noise (which is more dominant in low lighting conditions). One possible solution is to extend exposure time, but this may not be feasible as hand shaking may introduce blurring. Another conventional solution is to add larger aperture lensing and external flash. The former is a very expensive and size consuming proposition, while the latter may not be allowed (such as in museums) or may not be effective (such as for distance shots). Flash systems also are also costly and consume a lot of power.

Select embodiments of the present disclosure utilize a combination of different image sensors 101 (*e.g.*, infrared, RGB, panchromatic, etc.). For example, one image sensor may advantageously compensate for image information not provided by the other image sensor and vice versa. Accordingly, the image sensors may capture images simultaneously where a majority of image information is obtained from a primary image sensor and additional image information is provided from additional image sensor(s), as needed.

In one embodiment, low light image sensors 101 or panchromatic image sensors 101 in concert with a standard RGB (Bayer pattern) image sensor array are used. Panchromatic sensors receive up to three times the photons of a single RGB sensor due to having a smaller imager die size, but rely on the RGB neighbors for color identification. Such sensor array design is outperformed by an ordinary RGB sensor at higher lighting levels due to the larger image die size. One embodiment of an imaging device 150 utilizes a RGB type CMOS or CCD type sensor array for high lighting situations, and a second low light type of sensor designed for low lighting conditions (*e.g.*, fully panchromatic - black and white luma only, or interspersed panchromatic). Then, the imaging device 150 automatically switches between the two sensors to best capture images under current lighting conditions. Further, in one embodiment, simultaneous images may be captured during low lighting. In particular, by capturing multiple images using a panchromatic imager 101 and a normal lighting imager 101, the captured images can be correlated and combined to produce a more vivid low light image.

As an example, a panchromatic image sensor 101 may be used to capture a video stream at a higher frame rate under low lighting conditions while the chroma data is only sampled at half that rate. This corresponds to a temporal compression approach counterpart to a spatial approach that treats chroma with a lesser resolution than luma. Output of the process element 201, 202 may be a single frame sequence or may actually comprise two separate streams for post processing access.

In another scenario, motion blur can be reduced using the panchromatic imager 101 and a normal lighting imager 101. Motion blur is when an object is moving in front of the imaging device 150 and in a low light condition, for example, a chosen exposure for the low light condition may capture motion of an object being shot or of shaking of the imaging device 150 itself. Accordingly, the panchromatic imager is used to capture an image at a smaller exposure than a second image is captured by the normal lighting imager. The captured images can be correlated and combined to produce an image with motion blur corrected.

Embodiments of the imaging device 150 are not limited to having two image sensors and can be applied to a wide number of image sensors 101. For example, a tablet device could possibly have two imagers in the front and two imagers in the back of the device, where images (including video) from each of the imagers are simultaneously captured and combined into a resulting image.

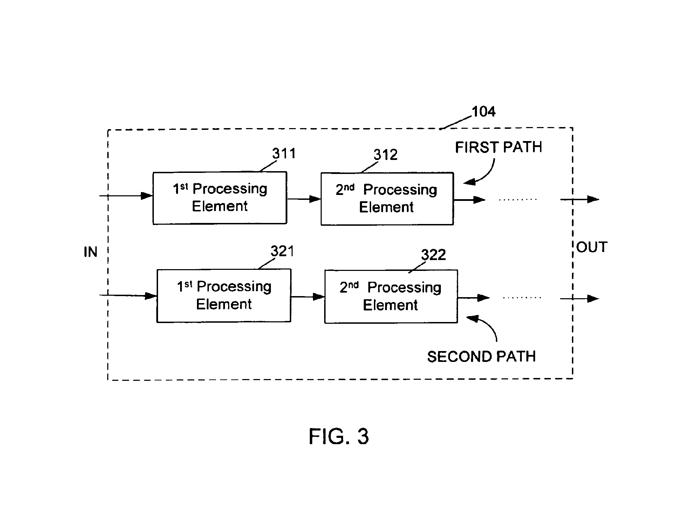

Referring next to FIG. 3, in one embodiment, an image signal processing pipeline implemented by pipeline processing logic 104 contains parallel paths instead of a single linear path. For example, the parallel paths may provide a first path and a second path. Further, in one embodiment, the first path comprises a main processing path and the second path comprises a supplemental processing path. Therefore, while image data from a first image sensor 101 is being processed in the first path, raw image data from a second image sensor 101 may be processed in the second and parallel path. It may be that the second path contains fewer stages or elements 321, 322 than the first path. Alternatively, the first path may contain the same number of or less number of stages or elements 311, 312 as compared to the second path. Further, the second path may involve resolution down-conversion of the image to lessen the amount of pixels that need to be processed during image processing, such as for image analysis, in the pipeline. The benefits of the parallel paths may apply to still images as well as video images captured by the image sensor(s) 101. Use of parallel paths in the image signal processing pipeline may enable processing of multiple image data simultaneously while maximizing final image quality.

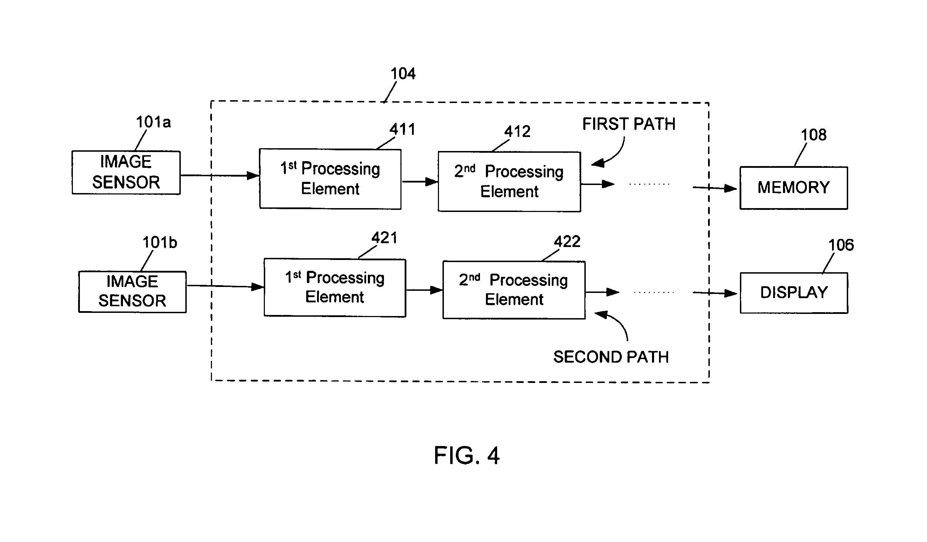

Referring to FIG. 4, in one embodiment of an image processing pipeline, processing elements 411, 412, may be divided up between elements that are suited for the main image and processing elements 421, 422 that are suited for the secondary image. Accordingly, a secondary image may be initially processed, such as being made smaller or scaled, for the benefit of downstream elements. As an example, the path of the secondary image may contain a noise filtering element due to a downstream element needed for the secondary image to have undergone noise reduction.

In some embodiments, the images generated by the first and second paths may be stored in memory 108 and made available for subsequent use by other procedures and elements that follow. Accordingly, in one embodiment, while a main image is being processed in a main path of the pipeline, another image which might be downsized or scaled of that image or a previous image may be read by the main path. This may enable more powerful processing in the pipeline, such as during noise filtering.

Also, in some embodiments, similar pixels in the multiple images may be processed once and then disparate pixels will be processed separately. It is noted that simultaneous capturing of images from two image sensors in close proximity with one another will be quite similar. Therefore, pixels of a first captured image may be processed in a main path of the pipeline. Additionally, similar pixels in a second captured image may be identified with a similarity mask, where the similar pixels are also contained in the first captured image (and are already being processed). After removal of the similar pixels in the second captured image, the remaining pixels may be processed in a secondary path of the pipeline. By removing redundant processing, significant power savings in the image signal processing pipeline may be realized.

Further, in some embodiments, the images generated by the first and second paths may be simultaneously displayed. For example, one display portion of a display 106 can be used to show a video (*e.g.*, outputted from the first path) and a second display portion of the display 106 can be used to show a still image or "snap-shot" from the video (*e.g.*, outputted from the second path) which is responsive to a pause button on an interface of the imaging device 150. Alternatively, an image frame may be shown in a split screen of the display (*e.g.*, left section) and another image frame may be shown in a right section of the display. The imaging device may be configured to allow for a user to select a combination of frames (*e.g.*, the frames being displayed in the split screen) and then compared and combined by processing logic 103, 104, 105 to generate an enhanced image having improved image quality and resolution.

As previously mentioned, embodiments of the imaging device 150 may employ modes of operation that are selectable from interface elements of the device. Interface elements may include graphical interface elements selectable from a display 106 or mechanical buttons or switches selectable or switchable from a housing of the imaging device 150. In one embodiment, a user may activate a stereoscopic mode of operation, in which processing logic 103, 104, 105 of the imaging device 150 produces a 3D image, using captured images, that is viewable on the display 106 or capable of being saved in memory 108. The user may also activate a 2D mode of operation, where a single image is captured and displayed or saved in memory 108. Further, the user may activate an enhanced 2D mode of operation, where multiple images are captured and used to produce a 2D image with enhanced characteristics (*e.g.*, improved depth of field, enhanced focus, HDR, super-resolution, etc.) that may be viewed or saved in memory 108.

In processing an image, binning allows charges from adjacent pixels to be combined which can provide improved signal-to-noise ratios albeit at the expense of reduced spatial resolution. In various embodiments, different binning levels can be used in each of the multiple image sensors. Therefore, better resolution may be obtained from the image sensor having the lower binning level and better signal-to-noise ratio may be obtained from the image sensor having the higher binning level. The two versions of a captured scene or image may then be combined to produce an enhanced version of the image.

In particular, in one embodiment, multiple image sensors 101 capture multiple images, each with different exposure levels. A process element 201, 202 of an image signaling processing pipeline correlates and performs high dynamic range processing on different combinations of the captured images. The resulting images from the different combinations may be displayed to a user and offered for selection by the user as to the desired final image which may be saved and/or displayed. In some embodiments, a graphical interface slide-bar (or other user interface control element) may also be presented that allows gradual or stepwise shifting providing differing weighting combinations between images having different exposures. For video, such setting may be maintained across all frames.

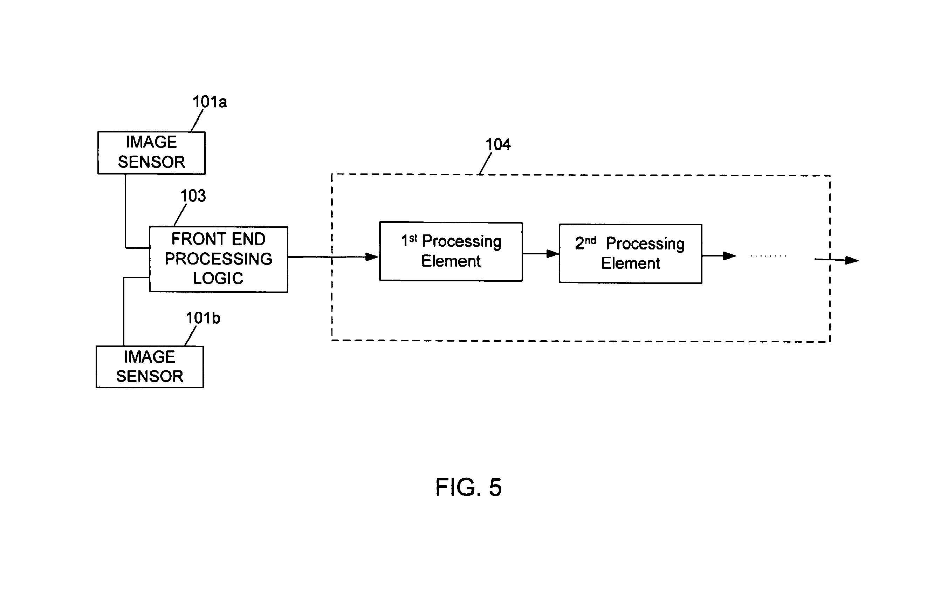

Multiplexing of the image signal processing pipeline is also implemented in an embodiment utilizing multiple image sensors 101. For example, consider a stereoscopic imaging device (*e.g.*, one embodiment of imaging device 150) that delivers a left image and a right image of an object to a single image signal processing pipeline, as represented in FIG. 5. The single image pipeline in pipeline processing logic 104 can therefore be multiplexed by front-end processing logic 103 between the left and right images that are being input in parallel to the pipeline. Alternatively, in enhanced 2D image processing, simultaneous image captures may also be input in parallel to the pipeline via multiplexing between the images.

Therefore, instead of processing one of the images in its entirety after the other has been processed in its entirety, the images can be processed concurrently by switching processing of the images between one another as processing time allows by front-end processing logic 103. This reduces latency by not delaying processing of an image until completion of the other image, and processing of the two images will finish more quickly.

Keeping the above points in mind, FIG. 6 is a block diagram illustrating an example of an electronic device 650 that may provide for the processing of image data using one or more of the image processing techniques briefly mentioned above. The electronic device 650 may be any type of electronic device, such as a laptop or desktop computer, a mobile phone, tablet, a digital media player, or the like, that is configured to receive and process image data, such as data acquired using one or more image sensing components.

Regardless of its form (*e.g.*, portable or non-portable), it should be understood that the electronic device 650 may provide for the processing of image data using one or more of the image processing techniques briefly discussed above, among others. In some embodiments, the electronic device 650 may apply such image processing techniques to image data stored in a memory of the electronic device 650. In further embodiments, the electronic device 650 may include multiple imaging devices, such as an integrated or external digital camera or imager 101, configured to acquire image data, which may then be processed by the electronic device 650 using one or more of the above-mentioned image processing techniques.

As shown in FIG. 6, the electronic device 605 may include various internal and/or external components which contribute to the function of the device 605. Those of ordinary skill in the art will appreciate that the various functional blocks shown in FIG. 6 may comprise hardware elements (including circuitry), software elements (including computer code stored on a computer readable medium) or a combination of both hardware and software elements. For example, in the presently illustrated embodiment, the electronic device 605 may include input/output (I/O) ports 610, one or more processors 620, memory device 630, non-volatile storage 640, networking device 650, power source 660, and display 670. Additionally, the electronic device 605 may include imaging devices 680, such as digital cameras or imagers 101, and image processing circuitry 690. As will be discussed further below, the image processing circuitry 690 may be configured implement one or more of the above-discussed image processing techniques when processing image data. As can be appreciated, image data processed by image processing circuitry 690 may be retrieved from the memory 630 and/or the non-volatile storage device(s) 640, or may be acquired using the imaging device 680.

Before continuing, it should be understood that the system block diagram of the device 605 shown in FIG. 6 is intended to be a high-level control diagram depicting various components that may be included in such a device 605. That is, the connection lines between each individual component shown in FIG. 6 may not necessarily represent paths or directions through which data flows or is transmitted between various components of the device 605. Indeed, as discussed above, the depicted processor(s) 620 may, in some embodiments, include multiple processors, such as a main processor (*e.g.*, CPU), and dedicated image and/or video processors. In such embodiments, the processing of image data may be primarily handled by these dedicated processors, thus effectively offloading such tasks from a main processor (CPU).

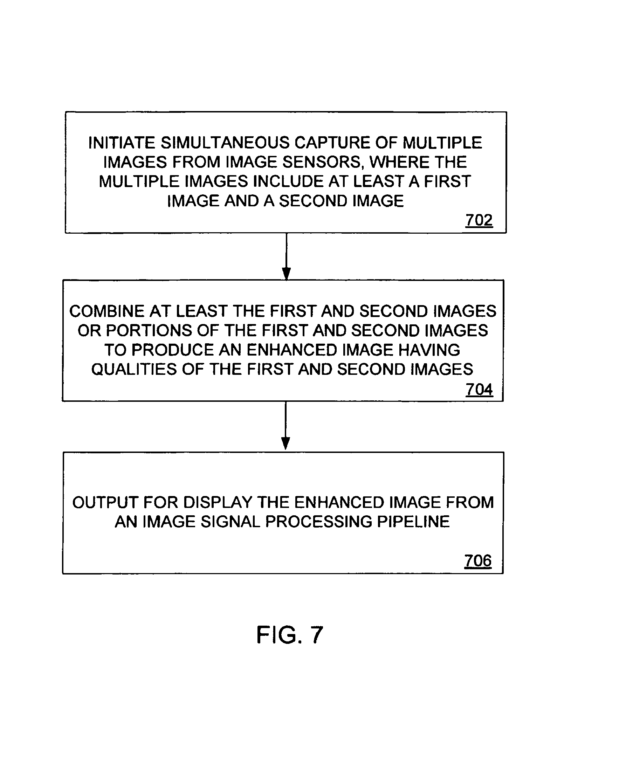

Referring next to FIG. 7, shown is a flowchart that provides one example of the operation of a portion of the image processing circuitry 100 according to various embodiments. It is understood that the flowchart of FIG. 7 provides merely an example of the many different types of functional arrangements that may be employed to implement the operation of the portion of the image processing circuitry 100 as described herein. As an alternative, the flowchart of FIG. 7 may be viewed as depicting an example of steps of a method implemented in the electronic device 605 (FIG. 6) according to one or more embodiments.

Beginning in step 702, control logic 105 triggers or initiates simultaneous capture of multiple images from image sensors 101, where the multiple images include at least a first image and a second image. The first image contains an imaging characteristic or setting that is different from an imaging characteristic of the second image. Possible imaging characteristics include exposure levels, focus levels, depth of field settings, angle of views, etc. In step 704, processing logic 103, 104 combines at least the first and second images or portions of the first and second images to produce an enhanced image having qualities of the first and second images. The enhanced image, as an example, may contain portions having depths of field from the first and second images, exposure levels from the first and second images, combined resolutions of the first and second images, etc. The enhanced image is output from an image signal processing pipeline of the processing logic and is provided for display, in step 706.

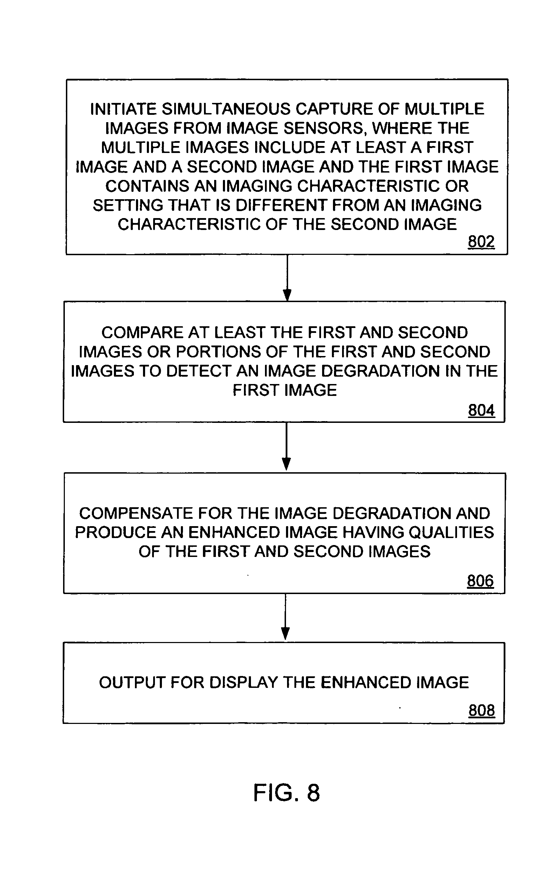

Next, referring to FIG. 8, shown is a flowchart that provides an additional example of the operation of a portion of the image processing circuitry 100 according to various embodiments. Beginning in step 802, control logic 105 triggers simultaneous capture of multiple images from image sensors 101, where the multiple images include at least a first image and a second image. The first image contains an imaging characteristic or setting that is different from an imaging characteristic of the second image. Further, due to the different characteristic or setting, one image may contain an image degradation that does not exist in the other image. For example, if one image has a longer exposure than the other image, then the image with the longer exposure could possibly have motion blur degradation that is not captured in the other image, although the other image may have other undesired characteristics, such as low lighting levels. In step 804, processing logic 104 compares at least the first and second images or portions of the first and second images to detect an image degradation in the first image, and then in step 806, the pipeline processing logic 104 compensates for the image degradation and produces an enhanced image having qualities of the first and second images. The enhanced image is output from an image signal processing pipeline of the pipeline processing logic 104 and is provided for display, in step 808. In an alternative embodiment, multiple enhanced images may be output, where one captured image may be used to detect an image degradation or defect in a second image and the second image may also be used to detect an image degradation/defect in the first image.

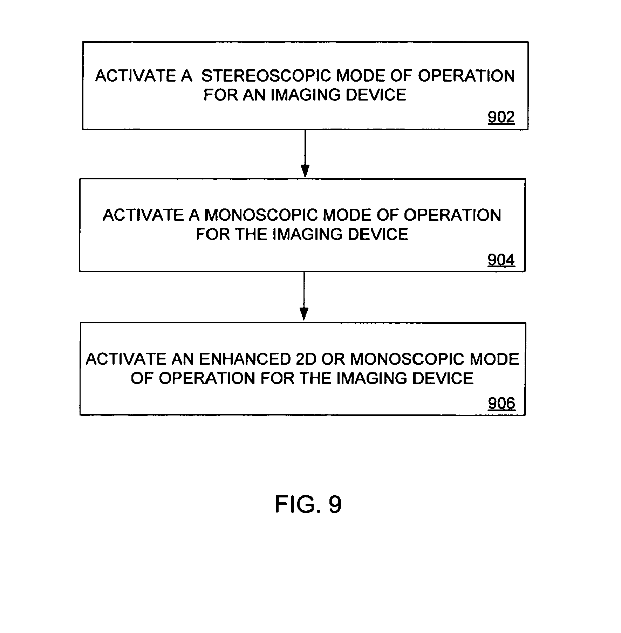

In FIG. 9, a flow chart is shown that provides an additional example of the operation of a portion of the image processing circuitry 100 according to various embodiments. Beginning in step 902, control logic 105 activates a stereoscopic mode of operation for an imaging device 150, where captured images are used to produce a 3D image that is viewable on the display 106 or capable of being saved in memory 108. In one embodiment, a user may generate a command for the control logic 105 to activate the stereoscopic mode of operation. In an alternative embodiment, the control logic 105 may be configured to automatically activate the stereoscopic mode of operation.

Correspondingly, in step 904, control logic 105 activates a 2D or monoscopic mode of operation for the imaging device 150, where a single image is captured and displayed or saved in memory 108. In one embodiment, a user may generate a command for the control logic 105 to activate the 2D mode of operation. In an alternative embodiment, the control logic 105 may be configured to automatically activate the 2D mode of operation without user prompting.

Further, in step 906, control logic 105 activates an enhanced 2D or monoscopic mode of operation for the imaging device 150, where multiple images are captured and used to produce a 2D image with enhanced characteristics (*e.g.*, improved depth of field, enhanced focus, HDR, super-resolution, etc.) that may be viewed or saved in memory 108. Additionally, in various embodiments, one of the outputs of the image processing may not be an enhanced image and may be image information, such as depth of field information, for the enhanced image. In one embodiment, a user may generate a command for the control logic 105 to activate the enhanced 2D mode of operation. In an alternative embodiment, the control logic 105 may be configured to automatically activate the enhanced 2D mode of operation without user prompting.

Any process descriptions or blocks in flow charts should be understood as representing modules, segments, or portions of code which include one or more executable instructions for implementing specific logical functions or steps in the process, and alternate implementations are included within the scope of embodiments of the present disclosure in which functions may be executed out of order from that shown or discussed, including substantially concurrently or in reverse order, depending on the functionality involved, as would be understood by those reasonably skilled in the art.

In the context of this document, a "computer readable medium" can be any means that can contain, store, communicate, or transport the program for use by or in connection with the instruction execution system, apparatus, or device. The computer readable medium can be, for example but not limited to, an electronic, magnetic, optical, electromagnetic, infrared, or semiconductor system, apparatus, or device. More specific examples (a nonexhaustive list) of the computer readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). In addition, the scope of certain embodiments includes embodying the functionality of the embodiments in logic embodied in hardware or software-configured mediums.

It should be emphasized that the above-described embodiments are merely possible examples of implementations, merely set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. An image capture device, comprising:
a first image sensor for recording a first image;
a second image sensor for recording a second image;
control processing circuitry to initiate simultaneous capture of the first image by the first image sensor and the second image by the second image sensor; and
image processing circuitry to generate an enhanced monoscopic image comprising at least portions of the first image and the second image.

2. The image capture device of claim 1, wherein the enhanced monoscopic image comprises a first portion obtained from the first image and a second portion obtained from the second image,
wherein the first portion comprises at least one of having an exposure level that is different from the second portion or having a depth of field that is different from the second portion.

3. The image capture device of claim 1, wherein a resolution of the enhanced monoscopic image is greater than individual resolutions of the first image and the second image.

4. The image capture device of claim 1, wherein the second image is analyzed and compared with the first image to isolate a defect in the first image, wherein the enhanced monoscopic image is a corrected version of the first image with the defect removed.

5. The image capture device of claim 1, wherein the control processing circuitry is configured to operate in a stereoscopic mode utilizing simultaneous operation of the first image sensor and the second image sensor to generate a stereoscopic image; a monoscopic mode utilizing singular operation of the first image sensor to generate a monoscopic image; and an enhanced monoscopic mode utilizing simultaneous operation of the first image sensor and the second image sensor to generate the enhanced monoscopic image.

6. The image capture device of claim 1, wherein the control processing circuitry is configured to automatically switch between modes of operation comprising at least two of the monoscopic mode, the stereoscopic mode, or the enhanced monoscopic mode.

7. The image capture device of claim 1, wherein the first image is used as image data for the enhanced monoscopic image and the second image is used as enhancement data to enhance at least one image characteristic of the first image, wherein the enhanced monoscopic image comprises the first image with the at least one improved characteristic.

8. The image capture device of claim 1, wherein the image processing circuitry processes similar pixels shared by the first image and the second image in a first processing path and processes dissimilar pixels of the second image in a second processing path.

9. The image capture device of claim 1, wherein the first image sensor operates at a first binning level during the simultaneous capture that is different from a second binning level at which the second image sensor operates during the simultaneous capture.

10. An image processing method, comprising:
recording a first image captured by a first image sensor;
recording a second image captured by a second image sensor, wherein the first image and the second image are simultaneously captured;
comparing at least portions of the first image and the second image; and
responsive to results of the comparing of the first image and the second image, generating an enhanced monoscopic image.

11. An image processing method of claim 10, wherein the first image is used as image data for the enhanced monoscopic image and the second image is used as enhancement data to enhance at least one image characteristic of the first image, wherein the enhanced monoscopic image comprises the first image with the at least one improved characteristic.

12. The image processing method of claim 10, wherein the at least one improved characteristic comprises at least one of an improved depth of field, an improved resolution; or an improved exposure level.

13. The image processing method of claim 10, wherein the second image is analyzed and compared with the first image to isolate a defect in the first image, wherein the enhanced monoscopic image is a corrected version of the first image with the defect removed.

14. The image processing method of claim 13, wherein the defect comprises a lens shading defect.

15. A computer readable medium having an image processing program, when executed by a hardware processor, causing the hardware processor to:
record a first image captured by a first image sensor;
record a second image captured by a second image sensor, wherein the first image and the second image are simultaneously captured;
compare at least portions of the first image and the second image; and
responsive to results of the comparing of the first image and the second image, generate an enhanced monoscopic image.
